# EUROPÄISCHE PATENTANMELDUNG

(11) **EP 0 707 919 A1**
(43) Veröffentlichungstag der Anmeldung: **24.04.1996**
(21) Anmeldenummer: 95116311.2
(22) Anmeldetag: 17.10.1995
(51) Int. Cl.: B23K 20/00, B23K 20/12

(54) **Verfahren und Schwingschweisskopf zum Reibschweissfügen oder Entgraten technischer Bauteile**

(30) Priorität: 17.10.1994 DE 4436857
(71) Anmelder: SCHÜCO International KG, D-33609 Bielefeld (DE)
(72) Erfinder: Fischer, Willi, D-37297 Berkatal (DE)
(74) Vertreter: Stracke, Alexander, Dipl.-Ing.

(57) **Zusammenfassung**

2.1 Es soll ein Verfahren und ein Schwingschweißkopf zum Reibschweißfügen oder Entgraten technischer Bauteile mit beliebiger Kontur der zu verschweißenden Flächen gestaltet werden, bei dem die Schwingweite mit einfachen Mitteln erreicht und nach der Erwärmung der zu verschweißenden Bauteile eine exakte Zuordnung der Bauteile sichergestellt wird.

2.2 Der Reibschweißkopf ist mit einem Steuerexzenter (3) und einer Parallelführung (4) ausgerüstet, durch die eine eingangsseitige Rotationsenergie in eine zirkular, parallelgeführte Bewegungsenergie umsetzbar ist. In der Ausgangslage fluchten die zu verschweißenden Bauteile miteinander. Mittels des Schwingschweißkopfes wird das eine Bauteil aus der Ausgangslage geringfügig bewegt und um das Zentrum des ortsfesten Bauteils in Reibverbindung mit dem ortsfesten Bauteil solange bewegt, bis die zu verschweißenden Flächen bzw. die angrenzenden Bereiche bis zur Verschweißungstemperatur aufgeheizt sind. Anschließend wird das bewegte Bauteil mechanisch zwangsgeführt in die mit dem ortsfesten Bauteil fluchtende Ausgangslage gebracht. Beide Bauteile werden über die Schweißdauer druckbelastet.

2.3 Das Verfahren kann zum Verschweißen symmetrischer oder unsymmetrischer technischer Bauteile, die aus Kunststoff oder Metall gefertigt sind, eingesetzt werden.

## Beschreibung

Die Erfindung bezieht sich auf ein Verfahren zum Reibschweißen oder Entgraten symmetrischer oder unsymmetrischer, aus Kunststoff oder Metall gefertigter technischer Bauteile, Präzisionsteile, z.B. auch von Profilen für Fenster, Türen oder Fassaden, und betrifft einen Schwingschweißkopf zur Durchführung dieses Verfahrens.

Bisher bekannte Reibschweißantriebe weisen zur Erzeugung der notwendigen Schweißbewegung (Amplitude) einerseits Feder-Masse-Systeme mit elektromagnetischer und hydraulischer Erregung, linear und auch quasi kreisförmig, andererseits mit linearer Zwangsamplitude, über Exzenter- oder Kurvenantrieb elektromotorisch angetrieben, auf.

In der US-PS 5 160 393 wird ein Schweißantrieb mit einer Drei-Magnetspulen-Erregung beschrieben, wobei mittels eines Federsystems der Anker in die Mitte gebracht wird. Der Schweißantrieb weist einen umlaufenden Bewegungsablauf auf, der nicht zwangsgeführt und damit undifferent ist.

Der Erfindung liegt die Aufgabe zugrunde, ein Verfahren der eingangs genannten Art und einen Schwingschweißkopf zur Durchführung des Verfahrens so zu gestalten, daß technische Bauteile mit einer beliebigen Kontur der zu verschweißenden Flächen miteinander verbunden werden können und die Schwingweite mit einfachen Mitteln erreicht und nach der Erwärmung eine exakte Zuordnung der zu verbindenden Bauteile sichergestellt wird.

Diese Aufgabe wird durch ein Verfahren zum Reibschweißen gelöst, bei dem in der Ausgangslage die zu verschweißenden Bauteile miteinander fluchten, dann das eine Bauteil aus der Ausgangslage mittels eines Schwingschweißkopfes geringfügig bewegt und um das Zentrum des ortsfesten Bauteils in Reibverbindung mit den ortsfesten Bauteilen so lange bewegt, bis die zu verschweißenden Flächen bzw. die angrenzenden Bereiche bis zur Verschweißungstemperatur aufgeheizt sind und bei dem anschließend das bewegte Bauteil mechanisch zwangsgeführt in die mit dem ortsfesten Bauteil fluchtende Ausgangslage gebracht und beide Bauteile über die Schweißdauer druckbelastet werden, wobei die Schweißdauer die Reiberwärmungszeit und die Aushärt- bzw. Auskühlzeit miteinschließt.

Zur Durchführung dieses Verfahrens wird ein Schwingschweißkopf verwendet, bei dem mit einem Steuerexzenter und einer Parallelführung die eingangsseitige Rotationsenergie in eine zirkulare, parallel geführt Bewegungsenergie umsetzbar ist, indem an jedem Punkt einer Schwingplatte oder am Werkstück bzw. am Werkzeug die planetierende Bewegung entsprechend der an einem Steueranschlag eingestellten Schwingweite (R) kreisrund und gleich ist und bei Antrieb-Ein die Schwingweite aus der zentrischen Mittellage (O) automatisch in das max. Maß (R) aussteuert, sowie bei Antrieb-Aus die entgegengesetzte Funktion von max. (R) in die zentrische Mittellage (O) umgesteuert wird, wobei die beim Schweißen zu bearbeitenden Teile in extrem kurzer Zeit ihre genaue Position wiedererhalten bzw. beim Entgraten das Entgratwerkzeug vom Werkstück abhebt, desweiteren die Schweiß- bzw. Entgratkraft (FN) durch eine externe Vorschubeinheit eingeleitet wird.

Bei einer vorteilhaften Ausführungsform des Schwingschweißkopfes wird der Steuerexzenter in einer Spindel mit exzentrischer Bohrung gelagert aufgenommen, wobei beide Exzenter das gleiche Maß (e) aufweisen und in Position (O) eine Schwingweite (O) vorliegt, wogegen in durch Antrieb-Ein durch einen Anschlag sich die eingestellte Schwingweite (R) automatisch einstellt.

Zu den technischen Bauteilen, die die erfindungsgemäß bearbeitet werden können, gehören auch medizintechnische Präzisionsteile und Elekronikteile, z.B. Mikrochip-Gehäuse.

Dieser erfindungsgemäße Schwingschweißkopf bietet folgende Vorteile:
- einen aus O und in O steuerbaren, definierten Schwingradius, mit genauer Geometrie, unabhängig von Massen und Schwingfrequenzen
- er kann in kompaktbauender Konstruktion als Schweißmodul integriert werden
- mit einer präzisen Kinematik sind Präzisionsbearbeitungen an technischen Teilen, Profilen und Rohren bei beliebig im Raum angeordneten dünnen und dicken Stegen oder Wandungen möglich,
- eine Schweißbearbeitung an Profilen und Rohren bei beliebigen Stoßwinkeln und Längen durch eine Tischausführung der Vorrichtung mit aufgesetzten Aufnahme- und Spanneinrichtungen,
- eine Entgratbearbeitung mit konturgerechten Entgratwerkzeugen, die mittels der Schwingkinematik die zu entgratende Kante berühren und dabei entgraten, wobei für die gleichmäßige Bearbeitung und beim Einrichten des Werkzeuges die Null-Stellung entscheidend ist.

Weitere Ausgestaltungen der Erfindung ergeben sich aus den Unteransprüchen.

Ausführungsbeispiele des Schwingschweißkopfes sind in den Zeichnungen dargestellt und werden im folgenden beschrieben. Es zeigen:

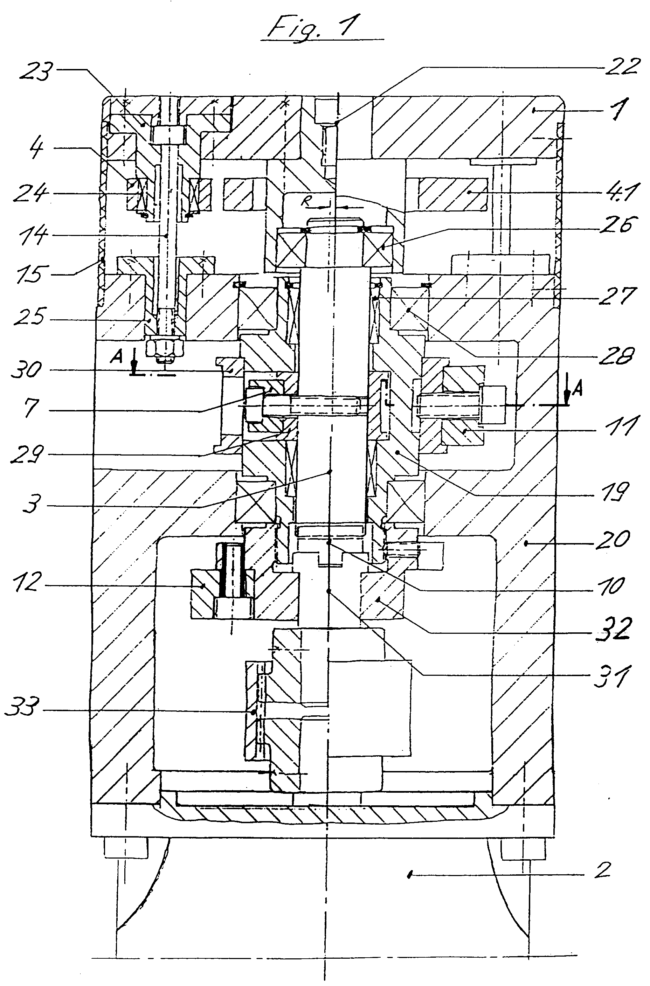

- Fig. 1: einen Schwingschweißkopf im Längsschnitt in einer Ausführung mit Stehbolzenführung,

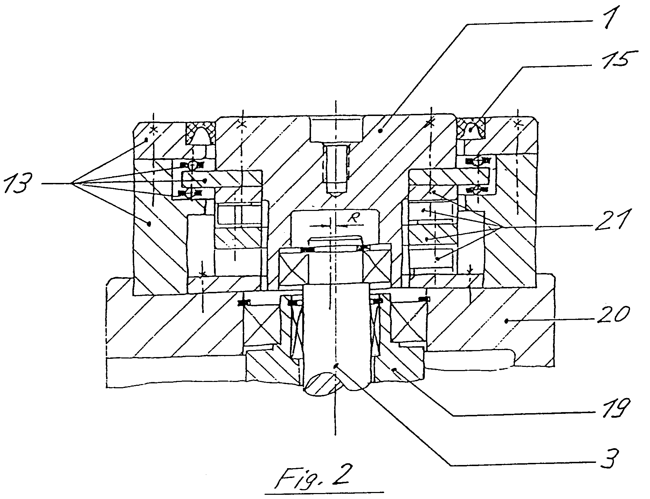

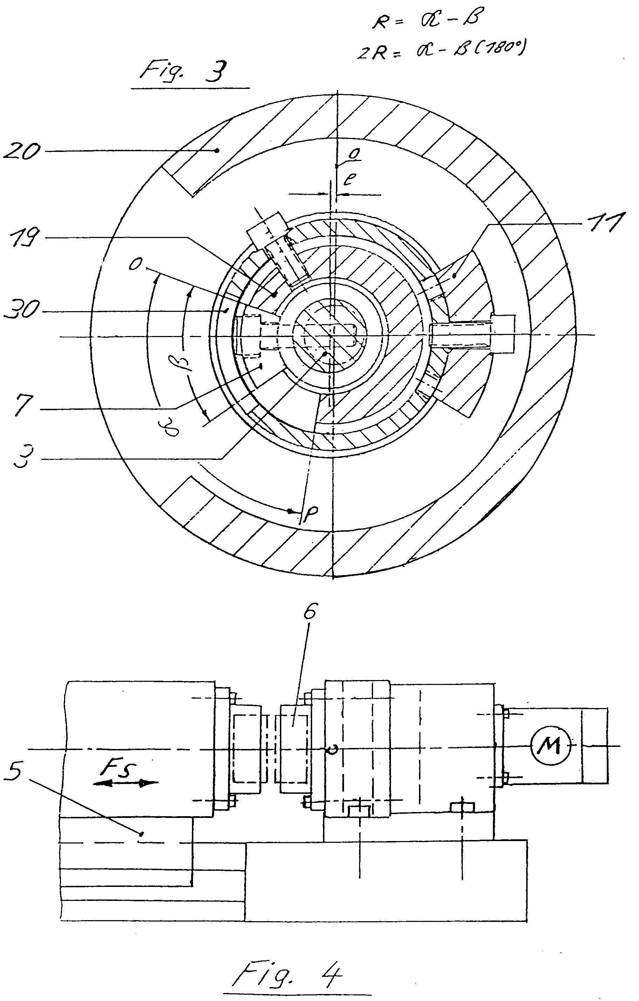

- Fig. 2: einen Schwingschweißkopf im Teillängsschnitt in einer Ausführung mit Doppel-Axial-Schwinglager,

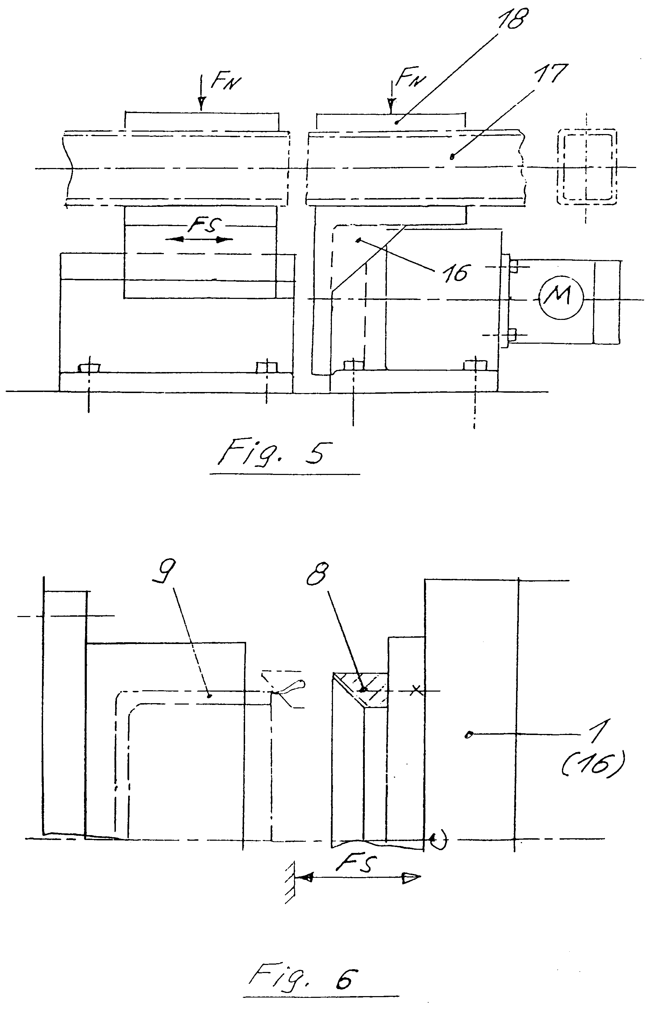

- Fig. 3: einen Schwingschweißkopf nach den Fig. 1 und 2 im Schnitt A-A in Fig. 1,
- Fig. 4: einen Schwingschweißkopf im Einsatz zum Planschweißen, zusammen mit einem Vorschubschlitten, in Seitenansicht,
- Fig. 5: einen Schwingschweißkopf im Einsatz zum Stoßschweißen für Profile und Rohre, zusammen mit einem Vorschubschlitten, in Seitenansicht,
- Fig. 6: einen Schwingschweißkopf im Einsatz zum Entgraten an technischen Teilen, Profilen und Rohren, mit Werkzeugdetail im Schnitt,

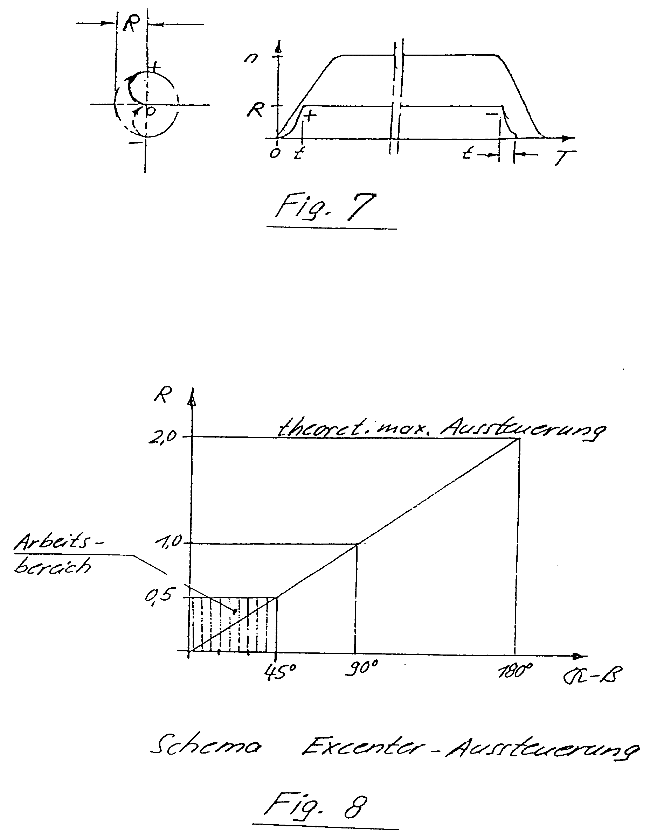

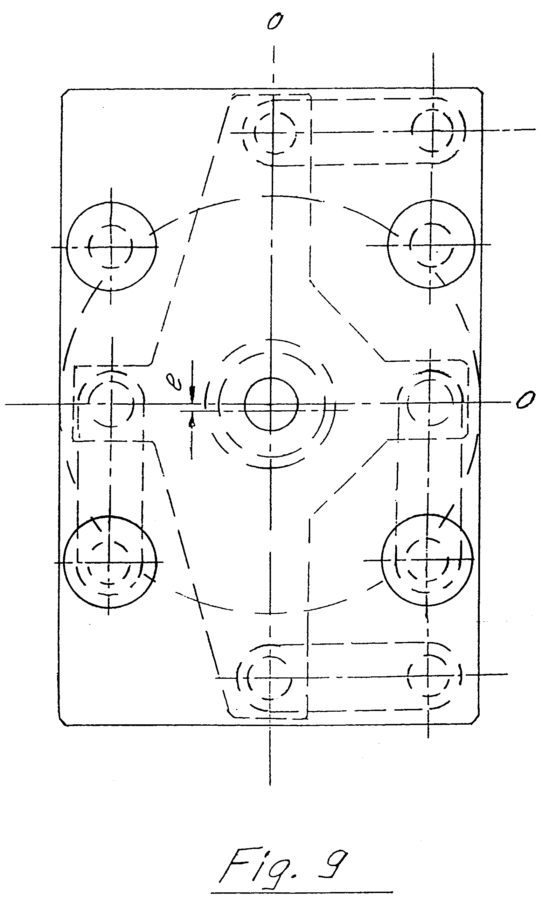

- Fig. 7: ein Bewegungsschema Schwingweitenaussteuerung und Zusammenhang mit Antrieb-Ein und Antrieb-Aus,

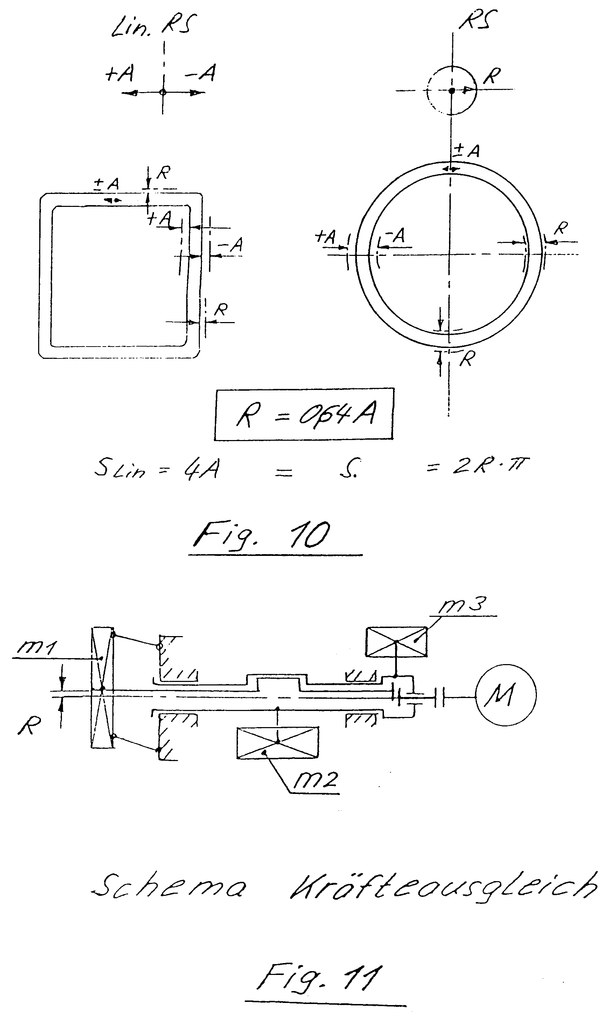

- Fig. 8: ein Diagramm der Schwingweite in Abhängigkeit vom Steuerwinkel,
- Fig. 9: einen Schwingschweißkopf nach den Fig. 1 und 2 in Vorderansicht, mit Schwingweite O dargestellt, wobei die Parallelführung unsichtbar gezeichnet wurde,
- Fig. 10: Unterschiede im Bewegungsverlauf lineares und zirkulares Scheißen bei dünnen Wandungen/Stegen und
- Fig. 11: ein Schema der Fliehkräfte mit Ausgleich im Schwingschweißkopf.

Der dargestellte Schwingschweißkopf zum Fügen oder Entgraten verschiedenster Materialien und Formen nach dem Prinzip des kreisenden Fügeweges (S zirk.) ist wie folgt aufgebaut.
Die Teilaufnahmen und Spannmittel 18 nehmen die Werkstücke 6,17 auf und sind an der Schwingplatte 1 bzw. dem Schwingwinkel 16, beim Entgraten das Werkzeug 8, auswechselbar befestigt.

Die Schwingplatte 1 erhält ihre radiale Auslenkung als Schwingradius (R) durch die Steuerexzenterwelle 3, wobei der Wellenexzenter mit Exzenter-Lager (26 in der Lagerbuchse (22) eingepaßt ist.

Die Steuerexzenterwelle 3 hat den Exzenterhub (e) und ist in der Spindel 19 in Steuerlagern 27 für die Steuerbewegung gelagert, dabei hat die Spindel 19 den gleichen Exzenterhub (e).

Damit ist in der Position (O) die Schwingweite gleich O und das System ist radial nicht ausgelenkt. In der entgegengesetzten Anschlagposition (P) besteht durch Verschieben der beiden Exzenterhübe (e) der Schwingradius (R).

Durch Steueranschlag 7 ist der Schwingradius R bestimmt, der Anschlag ist wechselbar und besitzt für unterschiedliche Schwingradien R entsprechende Bogenmaße Beta. Eine Axial-Führungsbuchse 19 sichert axial die Steuerexzenterwelle 3.

Die Anschlagpositionen O,P sind in der Spindel 19 in einer Ausnehmung gegeben. Die Spindel 19 erfährt die volle Drehfrequenz und ist deshalb in entsprechenden Spindel-Lagern 28 gelagert, wobei die Spindel 19 aber indirekt durch den Steueranschlag 7, Steuerexzenterwelle 3, Kreuzkupplung 10, Triebzapfen 31, Kupplung 33 und Antrieb 2 antreibbar ist.

Kreuzkupplung 10 gleicht während der Steuerbewegung bei Antrieb-Ein und Antrieb-Aus die Exzenterverschiebung aus.

Die Steuerbewegung wird in einem sehr kurzen Zeitanteil (t) der Beschleunigungszeit des Antriebes (2) durchfahren und ist im Prozeß eine Gewähr für die zeitoptimale Schweißposition.

Die Schwingplatte 1 muß tangential parallel geführt werden, dies erledigt ein Parallelgelenkpaar 4 in Verbindung mit einer Gelenkplatte 4.1, wobei die Gelenkpaare 4 einerseits an der Schwingplatte 1 und andererseits an dem Grundkörper 20, gelagert mit Parallel-Lagern 24 und Lagerzapfen 3,23 geführt sind.
Die gleiche Aufgabe übernimmt bei kleinen Schwingschweißköpfen eine Gleichlaufkupplung 21, die vorteilhaft innerhalb eines dann eingebauten Doppel-Axial-Schwinglagers 13 integriert ist, wobei von diesem die entstehenden Kippmomente und Axialkräfte (FS) beim Bearbeiten aufgenommen werden.

Bei größeren Schwingschweißköpfen erfolgt die Aufnahme der äußeren Kräfte durch Stehbolzen 14 die die geringe radiale Auslenkung (R) sicher übertragen, bei vorhandener Knicksteifigkeit.

Beim Betrieb mit Werkstücken 6,17, Spanneinrichtung 18, Entgratwerkzeug 8 entstehen Unwuchtkräfte, sie werden durch Gegenmassen m2 (11) und m3 (12) ausgeglichen, wobei die Gegenmassen auswechselbar sind und durch ein portables Wuchtmeßgerät auf den Einsatzfall hin bestimmt werden.

### Bezugszeichen

- 1: Schwingplatte
- 2: Antrieb
- 3: Steuerexzenter, Steuerexzenterwelle
- 4: Parallelgelenke
- 4.1: Gelenkplatte
- 5: Vorschubschlitten
- 6: Werkstück
- 7: Steueranschlag
- 8: Entgratwerkzeug
- 9: Entgratwerkzeug
- 10: Kreuzkupplung
- 11: Gegenmasse m2
- 12: Gegenmasse m3
- 13: Doppel-Axial-Schwinglager
- 14: Stehbolzen
- 15: Dichtung
- 16: Schwing-Winkel
- 17: Werkstück
- 18: Spanneinrichtung
- 19: Spindel
- 20: Grundkörper
- 21: Gleichalufkupplung
- 22: Lagerbuchse
- 23: Lagerzapfen
- 24: Parallellager
- 25: Stellbuchse
- 26: Exzenter-Lager
- 27: Steuerlager
- 28: Spindellager
- 29: Führungsbuchse
- 30: Einstellbuchse
- 31: Triebzapfen
- 32: Buchse
- 33: Kupplung
- R: Schwingradius
- e: Exzenterhub
- FN: Spannkraft
- FS: Vorschubkraft= Schweißkraft
- S: zirk., kreisender Fügeweg (zirkular)
- O: Position O = ohne Schwingradius
- P: Anschlagposition P = Schwingradius R
- t: Aussteuer-Zeitanteil

## Patentansprüche

1. Verfahren zum Reibschweißen symmetrischer oder unsymmetrischer, aus Kunststoff oder Metall gefertiger technischer Bauteile, z.B. auch von Profilen für Fenster, Türen oder Fassaden, bei dem in der Ausgangslage die zu verschweißenden Bauteile miteinander fluchten, dann das eine Bauteil aus der Ausgangslage mittels eines Schwingschweißkopfes geringfügig bewegt und um das Zentrum des ortsfesten Bauteils in Reibverbindung mit dem ortsfesten Bauteil solange bewegt wird, bis die zu verschweißenden Flächen bzw. die angrenzenden Bereiche bis zur Verschweißungstemperatur aufgeheizt sind, und daß anschließend das bewegte Bauteil mechanisch zwangsgeführt in die mit dem ortsfesten Bauteil fluchtende Ausgangslage gebracht und beide Bauteile über die Schweißdauer druckbelastet werden, wobei die Schweißdauer die Reiberwärmungszeit und die Aushärt- bzw. Auskühlzeit miteinschließt.

2. Schwingschweißkopf zum Reibschweißfügen nach Fig. 1 oder Entgraten technischer Bauteile, wobei die notwendige Schwingweite (R) über einen Antrieb (2) aussteuer- und antreibbar ist, dadurch gekennzeichnet, daß mit einem Steuerexzenter (3) und einer Parallelführung (4) die eingangsseitige Rotationsenergie in eine zirkulare, parallelgeführt Bewegungsenergie umsetzbar ist, indem an jedem Punkt einer Schwingplatte (1) oder am Werkstück (6) bzw. am Werkzeug (8) die zirkulare Bewegung entsprechend der an einem Steueranschlag (7) eingestellten Schwingweite (R) kreisrund und gleich ist und bei Antrieb-Ein die Schwingweite aus der zentrischen Mittellage (O) automatisch in das max. Maß (R) aussteuert, sowie bei Antrieb-Aus die entgegengesetzte Funktion von max. R in die zentrische Mittellage (O) umgesteuert wird, wobei die beim Schweißen zu bearbeitenden Teile in extrem kurzer Zeit ihre genaue Position wieder erhalten bzw. beim Entgraten das Entgratwerkzeug (8) vom Werkstück (9) abhebt und die Schweiß- bzw. Entgratkraft (FN) durch eine externe Vorschubeinheit (5) eingeleitet wird.

3. Schwingschweißkopf nach Anspruch 2, dadurch gekennzeichnet, daß der Steuerexzenter (3) in einer Spindel (19) mit exzentrischer Bohrung gelagert aufgenommen wird, beide Exzenter das gleiche Maß (e) aufweisen und in Position (O) eine Schwingweite (O) vorliegt, wogegen in durch Antrieb-Ein durch Anschlag (7) die eingestellte Schwingweite (R) sich automatisch einstellt.

4. Schwingschweißkopf nach Anspruch 2, dadurch gekennzeichnet, daß ein Steueranschlag (7) an der Steuerexzenterwelle (3) auswechselbar befestigt ist und dieser in Null-Position (O) an der Spindelöffnung anliegt und bei Antrieb-Ein infolge seiner durch eine Kreuzkupplung (10) mit dem Antrieb (2) verbundenen Bauweise die Antriebsbeschleunigung erfährt und aussteuert bis der Steueranschlag (7) an der anderen Flanke der Spindelöffnung anliegt, dadurch begrenzt ist und sich damit die Schwingweite (R) ergibt.

5. Schweingschweißkopf nach Anspruch 2, dadurch gekennzeichnet, daß durch Rotation der Spindel (19), direkt angetrieben durch den Steueranschlag (7) die Schwingweite (R) kreisförmig über jede Drehfrequenz ist, bei konstantem Schweißweg im Gegensatz zum linearen Schweißen die Schwingweite (R) nur 0,65 A der Amplitude beim linearen Schweißen ist und damit ideal beliebige, unregelmäßige dünne Stege geschweißt werden können, desweiteren die mit Antrieb-Aus sofort eingeleitete Nullstellung (O) der Schwingweite (R) in Millisekunden eine ungestörte Vernetzung der vorher durch Reibschweißen plastifizierten Materialstruktur in der Fügenaht garantiert.

6. Schwingschweißkopf nach Anspruch 2, dadurch gekennzeichnet, daß die Schwingplatte (1) mit mindestens zwei Punkten an Parallelgelenken (4) geführt wird, die ihrerseits über eine Gelenkplatte (4.1) und Parallelgelenken (4) mit dem Grundkörper (20) spielfrei parallel verbunden sind, wobei in kleinen Köpfen Gleichlaufkupplungen (21) zweckentfremdet für die Parallelführung der Schwingplatte (1) einsetzbar sind.

7. Schwingschweißkopf nach Anspruch 2, dadurch gekennzueichnet, daß der Antrieb (2) ein beliebiger sein kann, der für mittlere bis hohe Drehfrequenzen, bei ausreichender Beschleunigung, einen Start-Stop-Betrieb zuläßt.

8. Schwingschweißkopf nach Anspruch 2, dadurch gekennzeichnet, daß die Schwingplatte (1) gegen Kippmomente, je nach Schwingkopfgröße, durch mindestens ein Doppel-Axial-Schwinglager (13) oder mindestens drei Stehbolzen (14), deren Länge die geringe Biegung infolge der Schwingweite (R), bei niedriger Querkraft, mitmachen und die Schwingplatte (1) spiel- und verschleißfrei auf Zug und Druck führen.

9. Schwingschweißkopf nach Anspruch 2, dadurch gekennzeichnet, daß die Schwingplatte (1) als Winkel (16) zum Aufnehmen von Werkstücken (17) und Spanneinrichtungen (18) zum Profile und Rohre Stoßschweißen und Entgraten ausgeführt sein kann bzw. für andere Bearbeitungsaufgaben.

10. Schwingschweißkopf nach Anspruch 2, dadurch gekennzeichnet, daß der Schwingkopf sowohl in Ausführung mit Fußflansch oder in Flansch-Einbauform in Tischmaschinen, Bettmaschinen oder Sondermaschinen/Automationen Verwendung findet.

11. Schwingschweißkopf nach Anspruch 2, dadurch gekennzeichnet, daß ein Massenausgleich der Arbeitsmassen m1 durch eine Gegenmasse m2 (11), verstellbar und auswechselbar an der Spindel (19) befestigt ist und zum Ausgleich der Kippmomente eine Gegenmasse m3 (12) hinter der Lagerung zum Antrieb hin auch verstell- und auswechselbar angeordnet ist.

12. Schwingschweißkopf nach Anspruch 2, dadurch gekennzeichnet, daß eine flexible Dichtung (15) die Schwingplatte (1) mit dem Grundkörper (20) verbindet und gegen Einflüsse von außen abschirmt.
